# EUROPÄISCHE PATENTSCHRIFT

(11) **EP 0 687 682 B1**
(45) Veröffentlichungstag und Bekanntmachung des Hinweises auf die Patenterteilung: **19.01.2000**
(21) Anmeldenummer: 95108411.0
(22) Anmeldetag: 01.06.1995
(51) Int. Cl.: C07F 17/00, C08F 10/00

(54) **Übergangsmetallverbindungen**
Transition metal compounds
Composés de metaux de transition

(30) Priorität: 13.06.1994 DE 4420456
(43) Veröffentlichungstag der Anmeldung: 20.12.1995
(60) Teilanmeldung: 99110599.0
(73) Patentinhaber: TARGOR GmbH, 55116 Mainz (DE)
(72) Erfinder: Erker, Gerhard, Prof. Dr., D-48159 Münster (DE); Temme, Bodo, DCh., D-48143 Münster (DE); Aulbach, Michael, Dr., D-65719 Hofheim (DE); Bachmann, Bernd, Dr., D-65817 Eppstein (DE); Küber, Frank, Dr., D-61440 Oberursel (DE)

(56) Entgegenhaltungen:
- EP-A- 0 277 004
- EP-A- 0 427 697
- CHEMICAL ABSTRACTS, vol. 119, no. 23, 6. Dezember 1993, Columbus, Ohio, US; abstract no. 250097v, PELLECCHIA, C. ET AL 'BASE-FREE CATIONIC MONO(CYCLOPENTADIENYL)ZIRCONIUM COMPLEXES: SYNTHESIS, STRUCTURAL CHARACTERIZATION, AND CATALYTIC ACTIVITY IN OLEFIN POLYMERIZATION' Seite 997 ; & ORGANOMETALLICS, Bd.12, Nr.11, 1993 Seiten 4473 - 4478
- JOURNAL OF THE AMERICAN CHEMICAL SOCIETY, Bd.117, Nr.11, 22. März 1995 Seiten 3008 - 3021 VAN DER LINDEN, A. ET AL. 'POLYMERIZATION OF .ALPHA.-OLEFINS AND BUTADIENE AND CATALYTIC CYCLOTRIMERIZATION OF 1-ALKYNES ETC.'

## Beschreibung

Die vorliegende Erfindung betrifft eine zwitterionische, neutrale Übergangsmetallverbindung, die vorteilhaft zur Polymerisation von Olefinen eingesetzt werden kann. Hierbei kann auf die Verwendung von Aluminoxanen wie Methyaluminoxan (MAO) als Cokatalysator verzichtet werden und dennoch hohe Katalysatoraktivitäten erzielt werden.

Die Rolle von kationischen 14-Elektronen-Komplexen der allgemeinen Form R₃M⁺ (M = Ti, Zr, Hf) bei der Ziegler-Natta-Polymerisation mit Metallocenen ist allgemein anerkannt (M. Bochmann, Nachr. Chem. Lab. Techn. 1993, 41, 1220).

Während MAO als bislang wirksamster Cokatalysator in hohem Überschuss eingesetzt werden muß, eröffnet die Synthese kationischer Alkylkomplexe der allgemeinen Form R₃M⁺ (M = Ti, Zr, Hf) einen Weg zu MAO-freien Katalysatoren mit teilweise vergleichbarer Aktivität.

Kationische Alkylkomplexe können hergestellt werden durch
a) Oxidation von Metallocendialkyl-Komplexen mit beispielsweise AgBPh₄ oder [Cp₂Fe][BPh₄],
b) durch Protolyse von Metallocenalkylverbindungen mit beispielsweise schwach sauren Ammoniumsalzen des sehr stabilen, nicht basischen Tetra(pentafluorophenyl)boratanions (z.B. [PhMe₂NH]⁺[B(C₆F₅)₄]⁻) oder durch
c) Abstraktion einer Alkylgruppe aus Metallocenalkylverbindungen mit Hilfe von starken Lewis-Säuren. Als Lewis-Säuren können dabei Salze verwendet werden (Ph₃C⁺BR₄⁻) oder auch starke neutrale Lewis-Säuren wie B(C₆F₅)₃.

In J. Organomet. Chem. 1970, 22, 659, wird eine Reaktion von Tetramethyltitanium mit Triphenylboran bzw. Tribenzylboran beschrieben.

In J. Am. Chem. Soc. 1991, 113, 3623, wird die Synthese von "Kationen-ähnlichen" Metallocen-Polymerisationskatalysatoren beschrieben, die durch Alkylabstraktion von Metallocenalkylverbindungen mit Tris(pentafluorophenyl)boran dargestellt werden. Die Kristallstruktur von [1,2-(CH₃)₂C₅H₃]₂ZrCH₃]⁺[CH₃B(C₆F₅)₃]⁻ zeigt eine salzartige Struktur mit schwach koordinierender CH₃-Gruppe des Boratanions an das Metallzentrum. In EP 427,697 wird dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beansprucht. In EP 520,732 wird ein Verfahren zur Herstellung von Salzen der allgemeinen Form LMX⁺XA⁻ nach oben beschriebenem Prinzip beansprucht.

EP 558,158 beansprucht zwitterionische Katalysatorsysteme, die aus Metallocendialkyl-Verbindungen und Salzen der Form [R₃NH]⁺[BPh₄]⁻ dargestellt werden. Durch Umsetzung eines solchen Salzes mit Cp*₂ZrMe₂ wird durch Protolyse unter Methanabspaltung intermediär ein Zirkonocenmethyl-Kation generiert, welches nach C-H - Aktivierung einer Tetraphenylborat Kohlenstoff-Wasserstoff-Bindung und abermaliger Methanabspaltung zum Zwitterion Cp*₂Zr⁺-(m-C₆H₄)-B⁻Ph₃ abreagiert. Das Zr-Atom ist dabei kovalent an ein Kohlenstoffatom des Phenylringes gebunden und wird über eine agostische Wasserstoffbindung stabilisiert. Nach diesem Reaktionsprinzip entsteht nach Protolyse einer Metallocendialkylspezies mit einem perfluorierten [R₃NH]⁺[B(C₆F₅)₄]⁻ - Salz im ersten Schritt ebenfalls eine kationische Spezies, wobei nun die Folgereaktion (C-H - Aktivierung) zu zwitterionischen Komplexen (d.h. das Metallatom ist kovalent an das "ehemalige" Anion gebunden) nicht möglich ist. Hierin werden auch Metallocene Cp₂MR₂ eingesetzt, bei denen die Alkylreste R zyklisch miteinander verbunden sind, wie z.B. Cp₂Zr(2,3-dimethyl-1,3-butadien). Dabei entstehen nach Protonolyse Salze der Form [Cp₂Zr-R-RH]⁺[B(C₆F₅)₄]⁻.

In US 5,198,401 werden entsprechende Systeme beansprucht, wobei Dimethylaniliniumsalze mit perfluorierten Tetraphenylboratanionen verwendet werden. Hierin werden auch Metallocene Cp₂MR₂ eingesetzt, bei denen die Alkylreste R zyklisch miteinander verbunden sind, wie z.B. Cp₂Zr(2,3-dimethyl-1,3-butadien). Dabei entstehen nach Protonolyse ebenfalls Salze der Form [Cp₂Zr-R-RH]⁺[B(C₆F₅)₄]⁻. In EP 277,003, EP 277,004, EP 495,375 und WO 91/14713 werden Systeme nach ähnlichem Verfahrensprinzip beansprucht.

Die beschriebenen Verfahren zur Darstellung der kationischen Systeme der Form [R₃M]⁺[BR₄]⁻ (M = Ti, Zr, Hf) haben den Nachteil, daß die kationisierenden Reagenzien (R₃NH⁺BR₄⁻) teilweise aufwendig zu synthetisieren und kostenintensiv sind. Zudem besteht das Problem, daß nach Protonolyse aus dem Ammoniumsalz ein Amin R₃N entsteht, das bei sterisch ungehinderten Metallzentren an das stark lewis-saure R₃M⁺ -Kation koordinieren kann (US 5,198,401) und somit zu geringen Polymerisationsaktivitäten führt.

Die zwitterionischen Komplexe der Struktur Cp₂Zr⁺-m-C₆H₄B⁻Ph₃ haben den Nachteil, daß die Ausgangsverbindungen teuer und aufwendig zu synthetisieren sind und niedrige Polymerisationsaktivität zeigen.

Kationische Systeme der Struktur [Cp₂MR]⁺[RB(C₆F₅)₃]⁻ zeigen aufgrund des salzartigen Charakters sehr hohe Hydrolyseempfindlichkeiten und lassen sich nur beschränkt in technischem Maßstab einsetzen. Die mit diesen Systemen beobachteten Aktivitäten sind aufgrund der bereits genannten Stabilitätsprobleme und der vermutlich teilweise stark koordinierenden Alkylgruppe des Boratanions an das Metallzentrum niedrig.

Es bestand nun die Aufgabe, eine Übergangsmetallverbindung zu finden, welche die Nachteile des Standes der Technik vermeidet.

Es wurde nun gefunden, daß diese Aufgabe gelöst werden kann durch spezielle zwitterionische Übergangsmetallverbindungen.

Die vorliegende Erfindung betrifft daher eine zwitterionische Übergangsmetallverbindung der Formel I, 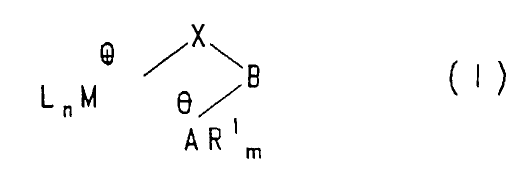 worin
- L: gleich oder verschieden ein π-Ligand oder ein Elektronendonor sind, n gleich 1, 2, 3 oder 4 ist,
- M: ein Metallatom der Gruppe IIIb, IVb, Vb oder VIb des Periodensystems der Elemente ist,
- X: ein Heteroatom oder eine Kohlenwasserstoffgruppe mit 1-40 C-Atomen ist,
- B: eine Kohlenwasserstoffgruppe mit 1-40 C-Atomen ist,
- A: ein Metallatom der Gruppe Ib, IIb, IIIa, IIIb, IVa, Va, Vb, VIb, VIIb oder VIIIb des Periodensystems der Elemente ist,
- R¹: gleich oder verschieden sind und einen perhalogenierten C₁-C₄₀-Kohlenwasserstoffrest bedeuten, und m gleich 1, 2, 3, 4 oder 5 ist.

Die Metallatome M und A sind über die Strukturelemente X und B durch kovalente Bindungen miteinander verbunden. Für den Fall, daß X eine Allyleinheit ist, kann die Bindung von X an das Metallatom M eine σ-Allyl- oder eine π-Allyl-Bindung sein.
π-Liganden sind bevorzugt unsubstituierte oder substituierte Cyclopentadienylgruppen wie 2-Methylcyclopentadienyl, Indenyl, 2-Methylindenyl, 2-Methyl-4-Phenyl-Indenyl, 2-Methyl-4,5-Benzoindenyl, 2-Methyl-4,6-Diisopropylindenyl, 4,5-Benzoindenyl, Fluorenyl, 4,7-tert.Butyl-Fluorenyl oder 2-Methyl-4-(2-pyridyl)indenyl.

Unter einem Elektronendonor wird ein Atom der Gruppe IVa, Va, VIa oder VIIa des Periodensystems der Elemente verstanden, welches Substituenten wie C₁-C₂₀-Kohlenwasserstoffgruppen tragen kann. Bevorzugt sind O, NR⁴₂, NR⁴, NR⁴₃, PR⁴₂, PR⁴, PR⁴₃, S, P(OR⁴)₂, P(OR⁴) oder Cl, wobei R⁴ C₁-C₂₀-Alkyl oder C₆-C₁₄-Aryl ist.

Zwei Reste L können über eine Verbrückung (Z) miteinander verbunden sein.

Die Verbrückung Z ist bevorzugt 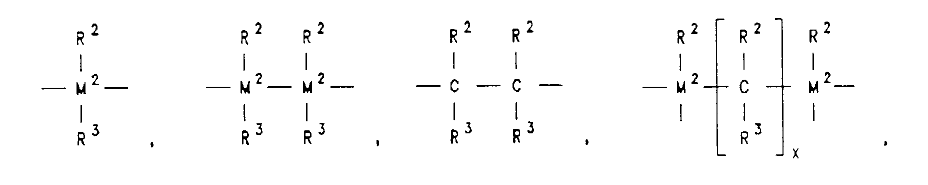 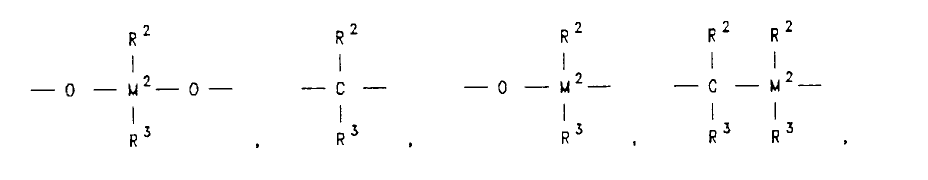 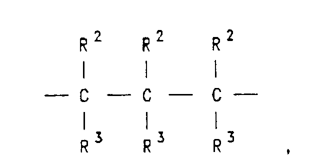 =BR², =AIR², -Ge-, -O-, -S-, =SO, = SO₂, =NR², =CO, = PR² oder =P(O)R² ist, wobei R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenylgruppe bedeuten und x eine Zahl von Null bis 18 ist, oder R² und R³ jeweils mit den sie verbindenden Atomen einen oder mehrere Ringe bilden und R² oder/und R³ an L gebunden sein können und
M² Silizium, Germanium oder Zinn ist.

Z kann auch zwei oder mehrere gleiche oder verschiedene Gruppen Lₙ M⁺XBA⁻R¹ₘ miteinander verknüpfen.

Unter einem Heteroatom wird jedes Atom des Periodensystems der Elemente verstanden, mit Ausnahme von Kohlenstoff und Wasserstoff. Bevorzugt sind O, S und N.

Kohlenwasserstoffgruppen X und B können gesättigt oder ungesättigt, linear oder verzweigt sein, z.B. eine C₁-C₂₀-Alkyl-, eine C₆-C₁₄-Aryl-, eine C₂-C₁₀-Alkenyl-, eine C₇-C₄₀-Arylalkyl-, eine C₇-C₄₀-Alkylaryl- oder eine C₈-C₄₀-Arylalkenylgruppe. Bevorzugt sind substituierte oder unsubstituierte Alkylgruppen, die auch aromatische Strukturelemente aufweisen können.

Bevorzugt ist n = 1, wenn M ein Element der Gruppe IIIb des Periodensystems der Elemente ist; n = 2, wenn M ein Metallatom der Gruppe IVb des Periodensystems der Elemente ist; n = 3, wenn M ein Element der Gruppe Vb des Periodensystems der Elemente ist; und n = 4, wenn M ein Element der Gruppe VIb des Periodensystems der Elemente ist.

R¹ ist ein C₁-C₄₀-Kohlenwasserstoffrest, der mit Halogen wie Fluor, Chlor, Brom oder Jod perhalogeniert ist, insbesondere eine perhalogenierte C₁-C₃₀-Alkylgruppe wie Trifluormethyl, Pentachlorethyl, Heptafluorisopropyl oder Monofluorisobutyl oder eine perhalogenierte C₆-C₃₀-Arylgruppe wie Pentafluorphenyl, Heptachlornaphthyl, Heptafluornaphthyl oder Heptafluortolyl.

Besonders bevorzugt sind Verbindungen der Formel I, worin
- M: ein Metallatom der Gruppe IVb des Periodensystems der Elemente wie Titan, Zirkonium oder Hafnium ist,
- n: gleich 2 ist,
- L: gleich oder verschieden sind und eine substituierte oder unsubstituierte Cyclopentadienylgruppe bedeuten, wobei zwei Reste L über eine Verbrückung Z miteinander verbunden sein können und
- Z: CR²R³ oder SiR²R³ ist oder eine Einheit Si-(CR²R³)ₓ-Si bedeutet, die zwei Fragmente LₙM⁺ XBA-R¹ₘ miteinander verknüpft, worin x eine ganze Zahl von 0 bis 10, bevorzugt x = 6 ist,
- X und B: zusammen eine drei bis fünfgliedrige (C₃-C₅)-Alkylkette bilden, die gesättigt oder ungesättigt ist und mit C₁-C₂₀-Kohlenwasserstoffresten substituiert sein kann,
- A: ein Metall der Gruppe Ib, IIb, IIIa, IVa, Va, Vb des Periodensystems der Elemente ist,
- R¹: gleich oder verschieden sind und eine perfluorierte Alkyl- oder Arylgruppe mit 1 bis 20 C-Atomen bedeuten und
- m: gleich 2,3 oder 4 ist.

Ganz besonders bevorzugt sind Verbindungen der Formel I, worin
- M: Zirkonium ist,
- n: gleich 2 ist,
- L: gleich oder verschieden sind und eine substituierte Cyclopentadienylgruppe bedeuten, wobei zwei Reste L über eine Verbrückung Z miteinander verbunden sind, wobei Z CR²R³ oder SiR²R³ ist,
- X und B: zusammen eine ungesättigte viergliedrige (C₄-)Alkylkette bilden, deren Wasserstoffatome auch durch C₁-C₂₀-Alkylgruppen substituiert sein können,
- A: ein Boratom ist,
- R¹: gleich sind und eine Pentafluorophenylgruppe (C₆F₅) bedeuten und
- m: gleich 3 ist.

Beispiele für erfindungsgemäße Verbindungen sind:
Bis(cyclopentadienyl)Zr ⁺CH₂CHCHCH₂B⁻(C₆F₅)₃;
Bis(methylcyclopentadienyl)Zr ⁺CH₂CHCHCH₂B⁻(C₆F₅)₃;
Bis(n-butyl-cyclopentadienyl)Zr ⁺CH₂CHCHCH₂B⁻(C₆F₅)₃;
BisindenylZr⁺ CH₂CHCHCH₂B⁻(C₆F₅)₃;
(tert.butylamido)dimethyl(tetramethyl-η⁵-cyclopentadienyl)silan-Zr⁺CH₂CHCHCH₂B⁻(C₆F₅)₃;
Bis(2-methylbenzoindenyl)Zr ⁺CH₂CHCHCH₂B⁻(C₆F₅)₃;
Dimethylsilandiylbis(2-methyl-indenyl)Zr⁺CH₂CHCHCH₂B⁻(C₆F₅)₃;
DimethylsilandiylbisindenylZr ⁺CH₂CHCHCH₂B⁻(C₆F₅)₃;
Dimethylsilandiylbis(2-methylbenzoindenyl)Zr⁺CH₂CHCHCH₂B⁻(C₆F₅)₃;
Dimethylsilandiyl(2-methylbenzoindenyl)(2-methyl-indenyl)Zr⁺CH₂CHCHCH₂B⁻(C₆F₅)₃;
Dimethylsilandiyl(2-methylbenzoindenyl)(2-methyl-4-phenylindenyl)-Zr⁺CH₂CHCHCH₂B⁻(C₆F₅)₃
Dimethylsilandiyl(2-methylindenyl)(4-phenylindenyl)Zr ⁺CH₂CHCHCH₂B⁻(C₆F₅)₃;
Dimethylsilandiylbis(2-methyl-4-phenyl-indenyl)Zr⁺CH₂CHCHCH₂B⁻(C₆F₅)₃;
Dimethylsilandiylbis(2-methyl-4,6-diisopropyl-indenyl)Zr⁺CH₂CHCHCH₂B⁻(C₆F₅)₃;
Dimethylsilandiylbis(2-methyl-4-naphthyl-indenyl)Zr⁺CH₂CHCHCH₂B⁻(C₆F₅)₃;
Isopropyliden(cyclopentadienyl)(fluorenyl)Zr ⁺CH₂CHCHCH₂B⁻(C₆F₅)₃;
Isopropyliden(cyclopentadienyl)(indenyl)Zr⁺CH₂CHCHCH₂B⁻(C₆F₅)₃;
[4-η⁵-Cyclopentadienyl)-4,7,7-trimethyl-(η⁵-4,5,6,7-tetrahydroindenyl)-Zr⁺CH₂CHCHCH₂B⁻(C₆F₅)₃;
Dimethylsilandiylbis(2-methyl-indenyl)Zr⁺OCH₂CH₂CH₂B⁻(C₆F₅)₃;
DimethylsilandiylbisindenylZr ⁺OCH₂CH₂CH₂B⁻(C₆F₅)₃;
Dimethylsilandiylbis(2-methylbenzoindenyl)Zr⁺OCH₂CH₂CH₂B⁻(C₆F₅)_{3;}
Dimethylsilandiyl(2-methylbenzoindenyl)(2-methyl-indenyl)Zr⁺OCH₂CH₂CH₂B⁻(C₆F₅)₃;
Dimethylsilandiyl(2-methylbenzoindenyl)(2-methyl-4-phenylindenyl)-Zr⁺OCH₂CH₂CH₂B⁻(C₆F₅)₃;
Dimethylsilandiyl(2-methylindenyl)(4-phenylindenyl)Zr⁺OCH₂CH₂CH₂B⁻(C₆F₅)₃;
Dimethylsilandiylbis(2-methyl-4-phenyl-indenyl)Zr⁺OCH₂CH₂CH₂B⁻(C₆F₅)₃;
Dimethylsilandiylbis(2-methyl-4,6-diisopropyl-indenyl)Zr⁺OCH₂CH₂CH₂B⁻(C₆F₅)₃;
Dimethylsilandiylbis(2-methyl-indenyl)Zr⁺CH₂CHCHCH₂B⁻(CF₃)₃;
DimethylsilandiylbisindenylZr⁺CH₂CHCHCH₂B⁻(CF₃)₃;
Dimethylsilandiylbis(2-methylbenzoindenyl)Zr⁺CH₂CHCHCH₂B⁻(CF₃)₃;
Dimethylsilandiyl(2-methylbenzoindenyl)(2-methyl-indenyl)Zr⁺CH₂CHCHCH₂B⁻(CF₃)₃;
Dimethylsilandiyl(2-methylbenzoindenyl)(2-methyl-4-phenylindenyl)-Zr⁺CH₂CHCHCH₂B⁻(CF₃)₃;
Dimethylsilandiyl(2-methylindenyl)(4-phenylindenyl)Zr⁺CH₂CHCHCH₂B⁻(CF₃)₃;
Dimethylsilandiylbis(2-methyl-4-phenyl-indenyl)Zr⁺CH₂CHCHCH₂B⁻(CF₃)₃;
Dimethylsilandiylbis(2-methyl-4,6-diisopropyl-indenyl)Zr⁺CH₂CHCHCH₂B⁻(CF₃)₃;
Dimethylsilandiylbis(2-methyl-4-naphthyl-indenyl)Zr⁺CH₂CHCHCH₂B⁻(CF₃)₃;
Dimethylsilandiylbis(2-methyl-indenyl)Zr⁺CH₂C(CH₃)C(CH₃)CH₂B⁻(CF₃)₃;
DimethylsilandiylbisindenylZr⁺CH₂C(CH₃)C(CH₃)CH₂B⁻(CF₃)₃;
Dimethylsilandiylbis(2-methylbenzoindenyl)Zr⁺CH₂C(CH₃)C(CH₃)CH₂B⁻(CF₃)₃;
Dimethylsilandiyl(2-methylbenzoindenyl)(2-methyl-indenyl)-Zr⁺CH₂C(CH₃)C(CH₃)CH₂B⁻(CF₃)₃;
Dimethylsilandiyl(2-methylbenzoindenyl)(2-methyl-4-phenylindenyl)-Zr ⁺CH₂C(CH₃)C(CH₃)CH₂B⁻(CF₃)₃;
Dimethylsilandiyl(2-methylindenyl)(4-phenylindenyl)Zr⁺CH₂C(CH₃)C(CH₃)CH₂B⁻(CF₃)₃;
Dimethylsilandiylbis(2-methyl-4-phenyl-indenyl)Zr⁺CH₂C(CH₃)C(CH₃)CH₂B⁻(CF₃)₃;
Dimethylsilandiylbis(2-methyl,4,6-diisopropyl-indenyl)-Zr⁺CH₂C(CH₃)C(CH₃)CH₂B⁻(CF₃)₃;
Dimethylsilandiylbis(2-methyl-4-naphthyl-indenyl)Zr⁺CH₂C(CH₃)C(CH₃)CH₂B⁻(CF₃)₃;
Methylphenylmethylen-(fluorenyl)(cyclopentadienyl)Zr⁺CH₂CHCHCH₂B⁻(C₆F₅)₃;
Diphenylmethylen-(fluorenyl)(cyclopentadienyl)Zr⁺CH₂CHCHCH₂B⁻(C₆F₅)₃;
Isopropyliden-(3-methylcyclopentadienyl)(fluorenyl)Zr⁺CH₂CHCHCH₂B⁻(C₆F₅)₃;
Dimethylsilandiyl-(3-tert.-Butylcyclopentadienyl)(fluorenyl)Zr⁺CH₂CHCHCH₂B⁻(C₆F₅)₃;
Diphenylsilandiyl-(3-(trimethylsilyl)cyclopentadienyl)(fluorenyl)-Zr⁺CH₂CHCHCH₂B⁻(C₆F₅)₃;
Phenylmethylsilandiylbis(2-methyl-indenyl)Zr⁺CH₂CHCHCH₂B⁻(C₆F₅)₃;
PhenylmethylsilandiylbisindenylZr⁺CH₂CHCHCH₂B⁻(C₆F₅)₃;
Phenylmethylsilandiylbis(2-methyl-4,5-benzoindenyl)Zr⁺CH₂CHCHCH₂B⁻(C₆F₅)₃;
Phenylmethylsilandiyl(2-methyl,4,5-benzoindenyl)(2-methyl-indenyl)-Zr⁺CH₂CHCHCH₂B⁻(C₆F₅)₃;
Phenylmethylsilandiyl(2-methyl-4,5-benzoindenyl)(2-methyl-4-phenylindenyl)-Zr⁺CH₂CHCHCH₂B⁻(C₆F₅)₃
Phenylmethylsilandiyl(2-methylindenyl)(4-phenylindenyl)Zr⁺CH₂CHCHCH₂B⁻(C₆F₅)₃;
Phenylmethylsilandiylbis(2-methyl-4-phenyl-indenyl)Zr⁺CH₂CHCHCH₂B⁻(C₆F₅)₃;
Phenylmethylsilandiylbis(2-ethyl-4-phenyl-indenyl)Zr⁺CH₂CHCHCH₂B⁻(C₆F₅)₃;
Phenylmethylsilandiylbis(2-methyl-4,6-diisopropyl-indenyl)Zr⁺CH₂CHCHCH₂B⁻(C₆F₅)₃;
Phenylmethylsilandiylbis(2-methyl-4-naphthyl-indenyl)Zr⁺CH₂CHCHCH₂B⁻(C₆F₅)₃;
Ethylenbis(2-methyl-indenyl)Zr⁺CH₂CHCHCH₂B⁻(C₆F₅)₃;
EthylenbisindenylZr⁺CH₂CHCHCH₂B⁻(C₆F₅)₃;
Ethylenbis(2-methyl-4,5-benzoindenyl)Zr⁺CH₂CHCHCH₂B⁻(C₆F₅)₃;
Ethylen(2-methyl-4,5-benzoindenyl)(2-methyl-indenyl)Zr⁺CH₂CHCHCH₂B⁻(C₆F₅)₃;
Ethylen(2-methyl-4,5-benzoindenyl)(2-methyl-4-phenylindenyl)Zr⁺CH₂CHCHCH₂B⁻(C₆F₅)₃;
Ethylen(2-methylindenyl)(4-phenylindenyl)Zr⁺CH₂CHCHCH₂B⁻(C₆F₅)₃;
Ethylenbis(2-methyl-4,5-benzoindenyl)Zr⁺CH₂CHCHCH₂B⁻(C₆F₅)₃;
Ethylenbis(2-methyl-4-phenyl-indenyl)Zr⁺CH₂CHCHCH₂B⁻(C₆F₅)₃;
Ethylenbis(2-methyl-4,6-diisopropyl-indenyl)Zr⁺CH₂CHCHCH₂B⁻(C₆F₅)₃;
Ethylenbis(2-methyl-4-naphthyl-indenyl)Zr⁺CH₂CHCHCH₂B⁻(C₆F₅)₃;
Ethylenbis(2-ethyl-4-phenyl-indenyl)Zr⁺CH₂CHCHCH₂B⁻(C₆F₅)₃;
Ethylenbis(2-ethyl-4,6-diisopropyl-indenyl)Zr⁺CH₂CHCHCH₂B⁻(C₆F₅)₃;
Ethylenbis(2-ethyl-4-naphthyl-indenyl)Zr⁺CH₂CHCHCH₂B⁻(C₆F₅)₃;
Dimethylsilandiylbis(2-ethyl-4-phenyl-indenyl)Zr⁺CH₂CHCHCH₂B⁻(C₆F₅)₃;
Dimethylsilandiylbis(2,3,5-trimethylcyclopentadienyl)Zr⁺CH₂CHCHCH₂B⁻(C₆F₅)₃;
1,6-{Bis[methylsilyl-bis(2-methyl-4-phenyl-indenyl)Zr⁺CH₂CHCHCH₂B⁻(C₆F₅)₃]}hexan;
1 ,6-{Bis[methylsilyl-bis(2-ethyl-4-phenyl-indenyl)Zr⁺CH₂CHCHCH₂B⁻(C₆F₅)₃]}hexan;
1,6-{Bis[methylsilyl-bis(2-methyl-4-naphthyl-indenyl)Zr⁺CH₂CHCHCH₂B⁻(C₆F₅)₃]}hexan;
1,6-{Bis[methylsilyl-bis(2-methyl-4,5-benzoindenyl)Zr⁺CH₂CHCHCH₂B⁻(C₆F₅)₃]}hexan;
1,6-{Bis[methylsilyl-(2-methyl-4-phenyl-indenyl)(2-methyl-indenyl)-Zr⁺CH₂CHCHCH₂B⁻(C₆F₅)₃]}hexan;
1,2-{Bis[methylsilyl-bis(2-methyl-4-phenyl-indenyl)Zr⁺CH₂CHCHCH₂B⁻(C₆F₅)₃)}ethan;
1,2-{Bis[methylsilyl-bis(2-ethyl-4-phenyl-indenyl)Zr⁺CH₂CHCHCH₂B⁻(C₆F₅)₃]}ethan;
1,2-{Bis[methylsilyl-bis(2-methyl-4-naphthyl,indenyl)Zr⁺CH₂CHCHCH₂B⁻-C₆F₅)₃]}ethan;
1,2-{Bis[methylsilyl-bis(2-methyl-4,5-benzoindenyl)Zr⁺CH₂CHCHCH₂B⁻(C₆F₅)₃]}ethan;
1,2-{Bis[methylsilyl-(2-methyl-4-phenyl-indenyl)(2-methyl-indenyl)-Zr⁺CH₂CHCHCH₂B⁻(C₆F₅)₃]}ethan.

Die Herstellung der erfindungsgemäßen Übergangsmetallverbindung der Formel I soll durch das nachfolgende Reaktionsschema veranschaulicht werden. 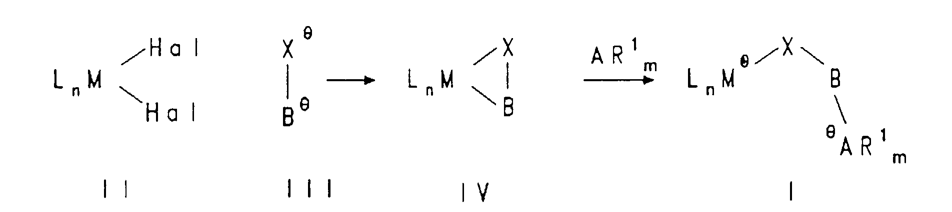 Dabei haben L, n, M, X, B, A, R¹ und m in den Formeln II, III und IV die gleiche Bedeutung wie in Formel I und Hal ist ein Halogenatom wie Fluor, Chlor, Brom oder Jod.
Verbindungen der Formel II sind in der Literatur beschrieben (J. Okuda, Topics in Current Chemistry, Vol. 160; Springer Verlag, Berlin Heidelberg 1991, Seite 97). Umsetzung von Verbindungen der Formel II in inerten Lösungsmitteln mit Dianionverbindungen der Formel III, wie z.B. 1,4-Butandiyllithium 2-Buten-1,4-diylmagnesium führen unter Salzabspaltung zur Bildung der cyclischen Systeme IV, in denen die M-X- bzw. die M-B-Bindung eine kovalente Bindung, aber auch eine Koordination der Verbindung X-B an das Metallatom M bedeuten kann.

Die Verbindung der Formel IV kann mit Lewis-Säuren der allgemeinen Formel AR¹ₘ in organischen Lösungsmitteln, wie z.B. Toluol, Benzol, Methylenchlorid, Tetrachlorkohlenstoff und Benzin, zur Verbindung der Formel I umgesetzt werden.

Die erfindungsgemäßen Übergangsmetallverbindungen der Formel I können isoliert oder direkt für weitere Reaktionen eingesetzt werden. Die Verbindungen der Formel I können auch ohne Isolierung von Zwischen- und Endstufen in einer Eintopfreaktion aus Metallocendihalogeniden, Dianionverbindungen und Lewis-Säuren dargestellt und direkt für die Polymerisaton eingesetzt werden.

Geeignete Lösungsmittel hierfür sind aliphatische oder aromatische Lösemittel, wie Hexan oder Toluol oder halogenierte Kohlenwasserstoffe, wie Methylenchlorid oder halogenierte aromatische Kohlenwasserstoffe wie o-Dichlorbenzol.

Eine weitere Möglichkeit zur Darstellung der erfindungsgemäßen Verbindungen der Formel I besteht in der Bildung von Metallacyclen der Formel IV durch elektrocyclische Ringschlussreaktion von z.B. Metallocenbisolefinkomplexen oder Metallocen-Olefin-Aldehyd-Komplexen und anschließender Umsetzung mit AR¹ ₘ.

Die vorliegende Erfindung betrifft auch ein Verfahren zur Herstellung eines Olefinpolymers durch Polymerisation mindestens eines Olefins in Gegenwart eines Katalysators, enthaltend mindestens eine Übergangsmetallverbindung der Formel I. Die Polymerisation kann eine Homo- oder Copolymerisation sein.

Bevorzugt werden Olefine der Formel R^{a}-CH = CH-R^{b} polymerisiert, worin R^{a} und R^{b} gleich oder verschieden sind und ein Wasserstoffatom, ein Halogenatom, eine Alkoxy-, Hydroxy-, Alkylhydroxy-, Aldehyd-, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder Carbonsäureestergruppe substituiert sein kann, oder R^{a} und R^{b} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester. Insbesondere werden Propylen oder Ethylen homopolymerisiert, Ethylen mit einem oder mehreren C₃-C₂₀-1-Olefinen, insbesondere Propylen, und/oder einem oder mehreren C₄-C₂₀-Dienen, insbesondere 1,3-Butadien, copolymerisiert oder Norbornen und Ethylen copolymerisiert.

Die Polymerisation wird bevorzugt bei einer Temperatur von -60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischen Medium durchgeführt werden.

Es können auch Mischungen von zwei oder mehr Übergangsmetall-Verbindungen der Formel I verwendet werden. Hierdurch können Polyolefine mit breiter oder multimodaler Molekulargewichtsverteilung erhalten werden.

Mit Hilfe der Verbindung der Formel I kann eine Vorpolymerisation erfolgen. Zur Vorpolymerisation wird bevorzugt das (oder eines der) in der Polymerisation eingesetzte(n) Olefin(e) verwendet.

Die Verbindungen der Formel I können auch auf einen Träger aufgebracht werden, insbesondere zur Steuerung der Kornmorphologie. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form.

Das geträgerte Katalysatorsystem kann als Pulver oder noch Lösemittel behaftet wieder resuspendiert und als Suspension in einem inerten Suspensionsmittel in das Polymerisationssystem eindosiert werden.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen, oder das Olefin wird vor der Zugabe in das Polymerisationsystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird die Verbindung der Formel I in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Vor der Zugabe des Katalysators, insbesondere des geträgerten Katalysatorsystems (enthaltend mindestens eine erfindungsgemäße Verbindung der Formel I, Trägermaterial und/oder ein Polyolefinpulver in feinverteilter Form) kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molar Al/M-Verhältnis klein gewählt werden.

Die erfindungsgemäßen Verbindungen der Formel I sind hochaktive Katalysatorkomponenten für die Olefinpolymerisation.

Grundsätzlich ist der Einsatz von Cokatalysatoren in der Polymerisationsreaktion nicht erforderlich, d.h., die erfindungsgemäßen Verbindungen der Formel I können als Katalysator für die Olefinpolymerisation verwendet werden, ohne daß es eines Cokatalysators wie Aluminoxan bedarf.

Die nachfolgenden Beispiele dienen zur näheren Erläuterung der Erfindung.

Allgemeine Angaben: Herstellung und Handhabung organometallischer Verbindungen erfolgten unter Ausschluß von Luft und Feuchtigkeit unter Argon-Schutz (Schlenk-Technik). Alle benötigen Lösungsmittel wurden vor Gebrauch durch mehrstündiges Sieden über einem geeigneten Trockenmittel und anschließende Destillation unter Argon absolutiert.

Die Verbindungen wurden mit ¹H-NMR, ¹³C-NMR und IR-Spektroskopie charakterisiert.

### A. Synthese der Verbindungen der Formel IV

Die Darstellung der Butadienkomplexe erfolgte nach G. Erker, K. Engel, Ch. Sarter in R.B. King, J.J. Eisch, Organometallic Synthesis, Vol 3, Academic Press, New York 1986, 529:

### Beispiel 1:

### Dimethylsilandiyl-bis(2-methyl-4,5-benzoindenyl)zirconium(η⁴-butadien):

Zu einer auf -40°C gekühlten Mischung von 5,0 g (8,67 mmol) Dimethylsilandiyl-bis(2-methyl-4,5-benzoindenyl)zirconiumdichlorid und 2,3 g (10,4 mmol, 1,2 Äquivalente) (2-Buten-1,4-diyl)magnesium-bistetrahydrofuran ("Butadienmagnesium") werden 100 ml Toluol (vorgekühlt auf -40°C) zugegeben. Man läßt die Mischung unter starkem Rühren langsam auf Raumtemperatur erwärmen. Nach vier Stunden Rühren wird die dunkelrote Lösung über eine Fritte von nicht umgesetztem Butadienmagnesium und gebildetem Magnesiumchlorid abgetrennt. Das Filtrat wird zur Trockne eingeengt und der Rückstand mit 10 ml Pentan gewaschen. Man erhält 4,4 g (70 %) eines tiefroten Pulvers.

### Beispiel 2:

### Dimethylsilandiyl-bis(2-methyl-4-phenylindenyl)zirconium(η⁴-butadien):

Zu einer auf -40°C gekühlten Mischung von 5,0 g (7,95 mmol) Dimethylsilandiyl-bis(2-methyl-4-phenylindenyl)zirconiumdichlorid und 2,1 g (9,5 mmol, 1,2 Äquivalente) (2-Buten-1,4-diyl)magnesium-bistetrahydrofuran ("Butadienmagnesium") werden 100 ml Toluol (vorgekühlt auf -40°C) zugegeben. Man läßt die Mischung unter starkem Rühren langsam auf Raumtemperatur erwärmen. Nach vier Stunden Rühren wird die dunkelrote Lösung über eine Fritte von nicht umgesetztem Butadienmagnesium und gebildetem Magnesiumchlorid abgetrennt. Das Filtrat wird zur Trockne eingeengt und der Rückstand mit 10 ml Pentan gewaschen. Man erhält 3,5 g (72 %) eines braunroten Pulvers.

### B. Synthese der Verbindungen der Formel I:

### Beispiel 3:

### Dimethylsilandiyl-bis(2-methyl-4,5-benzoindenyl)Zr⁺CH₂CHCHCH₂B⁻(C₆F₅)₃

3,0 g (5,35 mmol) Dimethylsilandiyl-bis(2-methyl-4,5-benzoindenyl)zirconium(η⁴-butadien) werden in 100 ml Toluol gelöst und mit 3,01 g (5,88 mmol, 1,1 Äquivalente) Tris(pentafluorophenyl)boran versetzt. Man läßt die Reaktionslösung 24 Stunden bei Raumtemperatur rühren und engt anschließend die stark dunkelbraun gefärbte Suspension auf die Hälfte des Volumens ein. Der Niederschlag wird abfiltriert und mit 10 ml Pentan nachgewaschen. Man erhält 5,27 g (92 %) eines schwerlöslichen rotbraun gefärbten Pulvers.

### Beispiel 4:

### Dimethylsilandiyl-bis(2-methyl-4-phenylindenyl)Zr⁺CH₂CHCHCH₂B⁻(C₆F₅)₃

3,0 g (4,90 mmol) Dimethylsilandiyl-bis(2-methyl-4-phenylindenyl)zirconium(η⁴-butadien) werden in 100 ml Toluol gelöst und mit 2,76 g (5,39 mmol, 1,1 Äquivalente) Tris(pentafluorophenyl)boran versetzt. Man läßt die Reaktionslösung 24 Stunden bei Raumtemperatur rühren und engt anschließend die stark dunkelbraun gefärbte Suspension auf die Hälfte des Volumens ein. Der Niederschlag wird abfiltriert und mit 10 ml Pentan nachgewaschen. Man erhält 4,84 g (88 %) eines schwerlöslichen rotbraun gefärbten Pulvers.

### C. Polymerisationsbeispiele

### Beispiel 5:

Die Katalysatorlösung wird durch Vermischen von 11 mg Biscyclopentadienylzirkonium(η⁴-butadien) in 20 ml Toluol mit einer Lösung von 20,4 mg Tris(pentafluorophenyl)boran in 20 ml Toluol hergestellt. 900 ml Toluol werden mit 1 ml einer 10 Gew.-%igen TIBA-Lösung in Toluol und anschließend mit 1 ml dieser Katalysator-Lösung versetzt.
Diese Lösung wird zur Polymerisation in einen inerten 1,5 dm³ Rührreaktor eingefüllt, auf 70°C temperiert und bei einem Druck von 7 bar Ethylen polymerisiert. Nach 2 Stunden wird der Reaktor entspannt, das Polymere aus der Suspension abfiltriert, mit Aceton gewaschen und 12 Stunden im Vacuum-Trockenschrank getrocknet. Es resultieren 38 g Polyethylen mit einem M_{w} von 297000 g/mol und einem M_{w}/Mₙ von 2,5 gemäß GPC-Messung.

### Beispiel 6:

Die Polymerisation aus Beispiel 5 wird mit hochreinem Ethylen wiederholt, mit dem Unterschied, daß kein TIBA zugegeben wurde. Es resultierten 37 g Polyethylen mit identischen Eigenschaften.

### Beispiel 7:

Die Polymerisation aus Beispiel 5 wird wiederholt mit dem Unterschied, daß 2 ml der Katalysator-Lösung zugesetzt werden und im Reaktor erst 100 ml 1-Hexen und anschließend 5 bar Ethylen zugegeben wurden. Nach 30 min wird der Reaktor entspannt, die Polymerisation mit Methanol gestoppt und das Polymere aus der Suspension abfiltriert, mit Aceton gewaschen sowie 12 Stunden im Vacuum-Trockenschrank getrocknet. Es resultieren 25 g eines Ethylen/1-Hexen-Copolymers mit 5,2 mol % Hexen (nach ¹³C-NMR) und einem M_{w} von 60000 g/mol sowie einem M_{w}/Mₙ von 2,6 gemäß GPC-Messung. Der DSC-Schmelzpunkt des 2. Heizens beträgt 110°C.

### Beispiel 8

In einem 1,5 dm³-Autoklav, der vorher gründlich mit Ethen gespült wurde, werden 600 cm³ einer 85 Gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurde eine Suspension von 2,28 mg 4-(η⁵-Cyclopentadienyl)-4,7,7-trimethyl-(η⁵-4,5,6,7-tetrahydroindenyl)Zr⁺CH₂CHCHCH₂B⁻(C₆F₅)₃ in 10 ml Toluol zugegeben (im Fall einer Wasserstoffregelung kann an dieser Stelle Wasserstoff aufgepreßt werden). Unter Rühren wurde eine Stunde polymerisiert, wobei der Ethendruck durch Nachdosieren bei 18 bar gehalten wurde.
Nach Ende der Reaktionszeit wurde das Polymerisationsgemisch in ein Gefäß abgelassen und sofort in 5 dm³ Aceton eingetragen, 10 min gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet. Nach der Trocknung wurden 224 g farbloses Polymer erhalten, welches eine Glastemperatur von 179°C, eine Viskositätszahl von 52 cm³/g, eine Reißspannung von 59 MPa und eine Reißdehnung von 3,1 % aufwies. Die Aktivität betrug 80,5 kg Polymer/h x mmol.

### Beispiel 9:

106 mg (0,385 mmol) Biscyclopentadienylzirkonium(η⁴-butadien) wurden in Toluol gelöst und mit einer Lösung von 186 mg (0,363 mmol) B(C₆F₅)₃ in Toluol versetzt. Die Bildung des Katalysators ist am Auftreten einer Trübung bzw. eines Niederschlags zu erkennen.
Parallel dazu wurde ein trockener 16-dm³-Reaktor zunächst mit Stickstoff und anschließend mit Propylen gespült und mit 10 dm³ flüssigem Propylen befüllt.

Dann wurden 15 cm³ Triisobutylaluminium (20 % in Kohlenwasserstoff, 12 mmol) in den Reaktor gegeben und der Ansatz bei 30°C 15 Minuten gerührt. Anschließend wurde die Katalysator-Suspension in den Reaktor gegeben, auf die Polymerisationstemperatur von 70°C aufgeheizt (4°C/min) und das Polymerisationssystem 1 Stunde durch Kühlung bei 70°C gehalten. Gestoppt wurde die Polymerisation durch Zusatz von 20 ml Isopropanol. Das überschüssige Monomer wurde abgegast und Lösungsmittelreste im Vakuum abgezogen.
Es resultierten 850 g flüssiges, ataktisches Polypropylen.
Die Katalysatoraktivität betrug 8 kg PP/(g Metallocen x h).
VZ = 5 cm³/g, Mw = 1500 g/mol, Mw/Mn = 3,2.

### Beispiel 10:

10 mg (17,9 µmol) rac-Dimethylsilandiyl-bis(2-methyl-4,5-benzo-1-indenyl)zirkonium-(η⁴-butadien) wurden in 10 ml Toluol gelöst und mit 10 ml einer Lösung von 9,2 mg (18 µmol) B(C₆F₅)₃ in Toluol versetzt. Die Bildung des Katalysators ist am Auftreten einer Trübung bzw. eines dunklen Niederschlags zu erkennen. Die Polymerisation erfolgte analog zu Beispiel 9 bei 70°C. Das überschüssige Monomer wurde abgegast und das Polymerpulver im Vakuum getrocknet. Es resultierten 2500 g isotaktisches Polypropylen-Pulver.
Die Katalysatoraktivität betrug 250 kg PP/(g Metallocen x h).
VZ = 240 cm³/g, Schmp. = 148,7°C, Mw = 298000 g/mol, Mw/Mn = 2,2, MFI _{(230/2,16)} = 3,2 dg/min.

### Beispiel 11:

Die Herstellung der Katalysatorsuspension aus Beispiel 10 wurde wiederholt mit dem Unterschied, daß 3 mg (4,8 µmol) rac-Dimethylsilandiyl-bis(2-methyl-4-phenyl-1-indenyl)zirkonium-(η⁴-butadien) gelöst in 10 cm³ Toluol mit 2,5 mg (4,9 µmol) B(C₆F₅)₃ gelöst in 10 cm³ Toluol zur Reaktion gebracht wurden. Die Polymerisation erfolgte nach dem Eindosieren der Katalysatorsuspension in den Reaktor bei 60°C. Aus der Polymerisation resultierten 2250 g isotaktisches Polypropylen-Pulver.
Die Katalysatoraktivität betrug 750 kg PP/(g Metallocen x h).
VZ = 620 cm³/g, Schmp. = 155°C, MFI _{(230/5)} = 0,35 dg/min.

### Beispiel 12:

Die Herstellung der Katalysatorsuspension aus Beispiel 10 wurde wiederholt mit dem Unterschied, daß 10 mg (21 µmol) rac-Dimethylsilandiyl-bis(2-methyl-1-indenyl)zirkonium-(η⁴-butadien) gelöst in 10 cm³ Toluol mit 10,7 mg (21 µmol) B(C₆F₅)₃ gelöst in 10 cm³ Toluol zur Reaktion gebracht wurden. Aus der Polymerisation resultierten 1900 g isotaktisches Polypropylen-Pulver.
Die Katalysatoraktivität betrug 190 kg PP/(g Metallocen x h).
VZ = 180 cm³/g, Schmp. = 145°C, Mw = 192000, Mw/Mn = 2,2, MFI _{(230/2,16)} = 12 dg/min

### Beispiel 13:

Die Herstellung der Katalysatorsuspension aus Beispiel 10 wurde wiederholt mit dem Unterschied, daß 10 mg (20,2 µmol) Phenylmethylmethylenfluorenylcyclopentadienylzirkonium-(η⁴-butadien) gelöst in 10 cm³ Toluol mit 10,7 mg (21 µmol) B(C₆F₅)₃ gelöst in 10 cm³ Toluol zur Reaktion gebracht wurden. Aus der Polymerisation resultierten 1100 g syndiotaktisches Polypropylen-Pulver.
Die Katalysatoraktivität betrug 110 kg PP/(g Metallocen x h).
VZ = 137 cm³/g, Schmp. = 133°C, Mw = 122000 g/mol, Mw/Mn = 2,3

### Beispiel 14:

### Reaktor-Vorbereitung:

In einen mehrmals mit Stickstoff gespülten 1500 ml Reaktor wurden 1000 ml einer 85 gewichtsproz. Lösung von Norbornen in Toluol gefüllt und auf 70°C aufgeheizt. Durch mehrfaches Aufdrücken von Ethylen (16 bar Überdruck) wurde die Lösung mit Ethylen gesättigt. In den entspannten Reaktor wurden im Ethylengegenstrom 2 ml einer 20 proz. toluolischen Triethylaluminiumlösung gegeben und anschließend 15 Minuten.gerührt.

### Katalysator-Vorbereitung:

Zu der Lösung von 9,0 mg (Butadiene)Isopropylen(1-indenyl)cyclopentadienylzirkonium (0,025 mmol) in 0,9 ml Toluol wurde eine Lösung von 12,6 mg Tris(pentafluorophenyl)borane (0,025 mmol) in 1,26 ml Toluol gegeben. Die Katalysatormischung wurde 25 Minuten bei Raumtemperatur voraktiviert.

### Polymerisation und Isolierung:

In die vorbereitete Reaktionslösung wurde die Katalysatormischung gegeben und anschließend möglichst schnell ein Ethylendruck von 16 bar eingestellt. Unter Rühren bei ca. 750 UpM wurde zwei Stunden bei 70°C polymerisiert, wobei der Ethylendruck konstant bei 16 bar gehalten wurde.
Zur Beendigung der Reaktion wurde zuerst der Reaktor entspannt und anschließend die Reaktionslösung in ein Gefäß abgelassen. Das Polymer wurde in 2500 ml Aceton gefällt und nach 5 Minuten Rühren filtriert. Der Filterkuchen wurde mehrfach mit 10 proz. Salzsäure und Aceton im Wechsel gewaschen. Abschließend wurde mit Wasser neutral gewaschen und nach Zugabe von 1000 ml Aceton filtriert. Das so gereinigte Pulver wurde bei 80°C und einem Druck von 0,2 bar 15 Stunden getrocknet.

### Charakterisierung:

Nach dem Trocknen wurde 30 g farbloses Pulver erhalten; das enstpricht einer Aktivität von 610 g Polymer/Stunde x mmol Metallocen. An dem Polymer wurde eine Viskositätszahl von 106 cm³/g und eine Glastemperatur von 135°C gemessen. Durch thermische Analyse konnte kein Schmelzpunkt nachgewiesen werden.

### Beispiel 15:

30 mg (31 µmol) rac-Dimethylsilandiyl-bis(2-methyl-1-indenyl)Zr⁺CH₂CHCHCH₂B⁻(C₆F₅)₃ werden in 30 ml Toluol gelöst. 10 g eines SiO₂ wird in die Katalysator-Lösung eingerührt, bis eine homogene Verteilung erreicht ist. Dann wird vom Lösungsmittel abfiltriert und noch zweimal mit 10 ml Toluol gewaschen.

Parallel dazu wurde ein trockener 16-dm³-Reaktor zunächst mit Stickstoff und anschließend mit Propylen gespült und mit 10 dm³ flüssigem Propylen befüllt. Dann wurden 15 cm³ Triisobutylaluminium (20 % in Kohlenwasserstoff, 12 mmol) in den Reaktor gegeben und der Ansatz bei 30°C 15 Minuten gerührt. Anschließend wurde die Katalysator-Suspension in den Reaktor gegeben, auf die Polymerisationstemperatur von 70°C aufgeheizt (4°C/min) und das Polymerisationssystem 1 Stunde durch Kühlung bei 70°C gehalten. Gestoppt wurde die Polymerisation durch Zusatz von 20 ml Isopropanol. Das überschüssige Monomer wurde abgegast und Lösungsmittelreste im Vakuum abgezogen.

Aus der Polymerisation resultieren 2,5 kg isotaktisches Polypropylen-Pulver. Die Katalysatoraktivität betrug 83 kg PP/(g Metallocen x h).
VZ = 184 cm³/g, Schmp. = 145°C, M_{w} = 193000 g/mol, M_{w}/Mₙ = 2,2.
Der Reaktor zeigt keine Beläge an Wänden oder Rührer.

### Beispiel 16:

### a) Herstellung der Katalysatorkomponente

Eine Lösung von 1 µmol Biscyclopentadienylzirkonium(η⁴-butadien) in 1 ml Toluol wird mit einer Lösung von 1 µmol Tris(pentafluorophenyl)boran in 10 ml Toluol vermischt und nach 15 minütiger Reaktionszeit im Vakuum auf ein Volumen von 2 ml eingeengt. Parallel hierzu werden 4 g ^{R}Accurel-LDPE Pulver einer Siebfraktion kleiner 200 µm im Vakuum getrocknet und mit Argon gespült. Das Träger-Pulver wird in die Katalysator-Lösung eingerührt, bis eine homogene Verteilung erreicht ist.

### b) Polymerisation

Ein trockener 1,5 dm³ Rührreaktor wird zur Entfernung des Sauerstoffs mit Stickstoff gespült und mit 0,9 dm³ eines inerten Dieselöls (Sdp. 100 bis 120°C) befüllt. Nach Spülen mit Ethylen wird auf 70°C temperiert und der Katalysator als Pulver zudosiert. Anschließend wird ohne zusätzlichen Aktivator bei einem Druck von 7 bar Ethylen polymerisiert. Nach 1 Stunde wird der Reaktor entspannt, das Polymer aus der Suspension abfiltriert und 12 Stunden im Vakuum-Trockenschrank getrocknet. Es resultieren 18 g Polyethylen-Pulver mit einer Schüttdichte von 0,253 kg/dm³ und einer Viskositätszahl VZ: 389 cm³/g. Die Polydispersität (nach GPC) beträgt M_{w}/Mₙ = 2,6. Der Reaktor zeigt keine Beläge an Wänden oder Rührer.

### Beispiel 17:

### a) Herstellung der Katalysatorkomponente

Bis(cyclopentadienyl)Zr⁺CH₂CHCHCH₂B⁻(C₆F₅)₃ wurde entsprechend Beispiel 15 auf SiO₂ geträgert.

### b) Gasphasenpolymerisation von Ethylen

In einem 2 dm³ Stahlautoklaven mit polierten Wandflächen wurde eine Gasphasenpolymerisation von Ethylen durchgeführt. Das Wirbelbett wurde mit Hilfe eines wandgängigen Doppelwendelrührers bei einer Vorlage von 10 g Polyethylenpulver als Saatbett mechanisch erzeugt. Über eine Druckbürette wurden zunächst der Cokatalysator (2 mmol) Triiosbutylaluminium in 2 cm³ iso-Pentan) und anschließend 1 g der Katalysatormischung (19,2 µmolZr) zudosiert.

Anschließend wurde die Polymerisation bei 8 bar Ethylenpartialdurck bei einer Temperatur von 80°C 1 Stunde durchgeführt und durch Entspannen des Autoklaven beendet.
Es wurden 118 g Polyethylen entsprechend einer Aktivität von 6,2 kg PE/mmol Metallocen mit einer VZ von 309 ml/g erhalten.

### Beispiel 18:

Die Herstellung der Katalysatorsuspension aus Beispiel 10 wurde wiederholt mit dem Unterschied, daß 10 mg (24 µmol) Dimethylmethylen-9-fluorenylcyclopentadienylzirkonium-(4-butadien) gelöst in 10 cm³ Toluol mit 12,8 mg (25 µmol) B(C₆F₅)₃ gelöst in 10 cm³ Toluol zur Reaktion gebracht wurden. Die Polymerisation erfolgte nach dem Eindosieren der Katalysatorsuspension in den Reaktor bei 60°C. Aus der Polymerisation resultierten 900 g syndiotaktisches Polypropylen-Pulver. Die Katalysatoraktivität betrug 90 kg PP/(g Metallocen x h).
VZ = 92 cm³/g, Schmp. = 126°C, Mw = 63000 g/mol, Mw/Mn = 2,1

### Beispiel 19:

Die Herstellung der Katalysatorsuspension aus Beispiel 10 wurde wiederholt mit dem Unterschied, daß 5 mg (8 µmol) rac-Dimethylsilandiyl-bis(2-methyl-4,6-di-Isopropyl-1-indenyl)zirkonium-(4-butadien) gelöst in 10 cm³ Toluol mit 4,1 mg (8,1 µmol) B(C₆F₅)₃ gelöst in 10 cm³ Toluol zur Reaktion gebracht wurden. Die Polymerisation erfolgte nach dem Eindosieren der Katalysatorsuspension in den Reaktor bei 60°C. Aus der Polymerisation resultierten 2100 g isotaktisches Polypropylen-Pulver.
Die Katalysatoraktivität betrug 420 kg PP/(g Metallocen x h).
VZ = 423 cm³/g Schmp. 154°C, MFI _{(230/5)} = 3,1 dg/min,
Mw = 588 000 g/mol, Mw/Mn = 3,5.

### Beispiel 20:

Die Herstellung der Katalysatorsuspension aus Beispiel 11 wurde wiederholt. Die Polymerisation erfolgte nach dem Eindosieren der Katalysatorsuspension in den Reaktor bei 70°C. Aus der Polymerisation resultierten 2800 g isotaktisches Polypropylen-Pulver.
Die Katalysatoraktivität betrug 933 kg PP/(g Metallocen x h).
VZ = 544 cm³/g, Schmp. 154°C, MFI _{(230/5)} = 1,3 dg/min, Mw = 741 000 g/mol, Mw/Mn = 2,8.

### Beispiel 21:

Die Herstellung der Katalysatorsuspension aus Beispiel 12 wurde wiederholt mit dem Unterschied, daß der 16-dm³-Reaktor mit 10 dm³ flüssigem Propylen und 2,5 Nl Wasserstoffgas befüllt wurde. Dann wurden 10 cm³ Triisobutylaluminium (20 % in Kohlenwaserstoff, 10 mmol) in den Reaktor gegeben und der Ansatz bei 30°C 15 Minuten gerührt.
Anschließend wurde die Katalysator-Suspension in den Reaktor gegeben, auf die Polymerisationstemperatur von 70°C aufgeheizt (4°C/min) und das Polymerisationssystem 1 h durch Kühlung bei 70°C gehalten. Aus der Polymerisation resultierten 3200 g isotaktisches Polypropylen-Pulver.
Die Katalysatoraktivität betrug 320 g PP/(g Metallocen x h).
VZ = 164 cm³/g, Schmp. = 147°C, MFI_{(230/2,16)} = 25 dg/min

### Beispiel 22:

Die Herstellung der Katalysatorsuspension aus Beispiel 10 wurde wiederholt mit dem Unterschied, daß 2 mg (3,1 µmol) rac-Dimethylsilandiyl-bis(2-ethyl-4-phenyl-1-indenyl)zirkonium-(4-butadien) gelöst in 5 cm³ Toluol mit 1,7 mg (3,3 µmol) B(C₆F₅)₃ gelöst in 5 cm³ Toluol zur Reaktion gebracht wurden. Aus der Polymerisation resultierten 2150 g isotaktisches Polypropylen-Pulver.
Die Katalysatoraktivität betrug 1075 kg PP/(g Metallocen x h).
VZ = 656 cm³/g, Schmp. = 162°C, MFI_{(230/5)} = 0,8 dg/min,
Mw = 957000 g/mol, Mw/Mn = 3,0

### Beispiel 23:

Die Herstellung der Katalysatorsuspension aus Beispiel 10 wurde wiederholt mit dem Unterschied, daß 2 mg (2,8 µmol) rac-Diemthylsilandiyl-bis(2-methyl-4-naphthyl-1-indenyl)zirkonium-(4-butadien) gelöst in 5 cm³ Toluol mit 1,4 mg (2,8 µmol) B(C₆F₅)₃ gelöst in 5 cm³ Toluol zur Reaktion gebracht wurden. Aus der Polymerisation resultierten 2500 g isotaktisches Polypropylen-Pulver.
Die Katalysatoraktivität betrug 1250 kg PP/(g Metallocen x h).
VZ = 777 cm³/g, Schmp. = 163°C, MFI_{(230/5)} = 0,5 dg/min,
Mw = 1200000 g/mol, Mw/Mn = 3,2

### Beispiel 24:

10 g Kieselgel (Davison 948), das bei 800°C konditioniert wurde, wurden mit 0,5 g B(C₆F₅)₃ gelöst in 15 cm³ Toluol versetzt und homogenisiert. Das Lösungsmittel wurde im Vakuum abgezogen. Es resultiert ein frei fließendes Pulver. 200 mg rac Dimethylsilandiyl-bis(2-methyl-1-indenyl)zirkonium-(4-butadien) (435 µmol) wurden in 15 cm³ Toluol gelöst und in kleinen Portionen auf das intensiv gerührte, frei fließende Pulver aufgetragen. Das Pulver nimmt eine intensiv dukelrote Farbe an. Anschließend wurde das Toluol im Vakuum abgezogen. Es resultierten 11,3 g geträgerter Katalysator als frei fließendes Pulver. 1,5 g des geträgerten Katalysators wurden in 10 ml Hexan suspendiert und in den Polymerisationsreaktor eingeschleust. Die Polymerisation erfolgte analog zu Beispiel A bei 70°C. Das überschüssige Monomer wurde abgesaugt und das Polymerpulver im Vakuum getrocknet. Es resultierten 2350 g isotaktisches Polypropylen-Pulver mit einer Schüttdichte von 0,44 g/ml und einem mittleren Korndurchmesser der Polymerkörner von 650 µm. Die Analyse des Polymers ergab
VZ = 172 cm³/g, Schmp. = 145°C, Mw = 192000 g/mol, Mw/Mn = 2,2 MFI_{(230/2,16)} = 13 dg/min

### Beispiel 25 (Vergleichsbeispiel):

Die Herstellung der Katalysatorsuspension aus Beispiel 10 wurde wiederholt mit dem Unterschied, daß 5 mg (11,1 µmol) rac-Dimethylsilandiyl-bis-1-indenylzirkonium-(η⁴-butadien) gelöst in 10 cm³ Toluol mit 5,7 mg (11,1 µmol) B(C₆F₅)₃ gelöst in 10 cm³ Toluol zur Reaktion gebracht wurden. Aus der Polymerisation resultierten 2200 g isotaktisches Polypropylen-Pulver.
Die Katalysatoraktivität betrug 440 kg PP/(g Metallocen x h).
VZ = 52 cm³/g, Schmp. = 140°C, Mw = 49000 g/mol, Mw/Mn = 2,2
16,6 mg (40,7 µmol) rac-Dimethylsilandiyl-bis-1-indenylzirkoniumdimethyl wurden in 10 cm³ Toluol gelöst und mit 21 mg (41 µmol) B(C₆F₅)₃ gelöst in 10 cm³ Toluol zur Reaktion gebracht wurden. Es ist keine Trübung oder Niederschlagsbildung zu beobachten. Die Katalysatorlösung wird wie in Beispiel 9 zur Polymerisation eingesetzt. Es resultierten 130 g isotaktisches Polypropylen-Pulver.
Die Katalysatoraktivität betrug 8 kg PP/(g Metallocen x h).
VZ = 67 cm³/g, Schmp. = 139,5°C, Mw = 62000 g/mol, Mw/Mn = 2,1

## Patentansprüche

1. Zwitterionische Übergangsmetallverbindung der Formel I 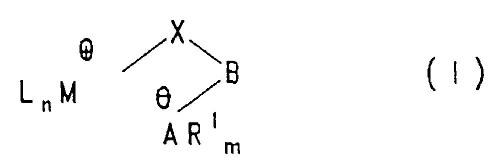 ,worin
L gleich oder verschieden ein π-Ligand oder ein Elektronendonor sind, n gleich 1, 2, 3 oder 4 ist,
M ein Metallatom der Gruppe IIIb, IVb, Vb oder VIb des Periodensystems der Elemente ist,
X ein Heteroatom oder eine Kohlenwasserstoffgruppe mit 1-40 C-Atomen ist,
B eine Kohlenwasserstoffgruppe mit 1-40 C-Atomen ist,
A ein Metallatom der Gruppe Ib, IIb, IIIa, IIIb, IVa, Va, Vb, VIb, VIIb oder VIIIb des Periodensystems der Elemente ist,
R¹ gleich oder verschieden sind und einen perhalogenierten C₁-C₄₀-Kohlenwasserstoffrest bedeuten, und m gleich 1, 2, 3, 4 oder 5 ist.

2. Übergangsmetallverbindung gemäß Anspruch 1, dadurch gekennzeichnet, daß die Reste L gleich oder verschieden ein π-Ligand sind.

3. Übergangsmetallverbindung gemäß Anspruch 1 oder 2, dadurch gekennzeichnet, daß die Reste L gleich oder verschieden eine unsubstituierte oder substituierte Cyclopentadienylgruppe sind.

4. Übergangsmetallverbindung gemäß einem oder mehreren der Ansprüche 1 bis 3, dadurch gekennzeichnet, daß die Reste L über eine Verbrückung miteinander verbunden sind.

5. Übergangsmetallverbindung gemäß einem der Ansprüceh 1 bis 4, dadurch gekennzeichnet, daß n = 2 ist, wenn M ein Metallatom der Gruppe IV b des Periodensystems der Elemente ist.

6. Übergangsmetallverbindung gemäß einem der Ansprüche 1 bis 5, dadurch gekennzeichnet, daß
M ein Metallatom der Gruppe IVb des Periodensystems der Elemente ist, n gleich 2 ist,
L gleich oder verschieden sind und eine substituierte oder unsubstituierte Cyclopentadienylgruppe bedeuten, wobei zwei Reste L über eine Verbrückung Z miteinander verbunden sein können, und
Z CR²R³ oder SiR²R³ ist oder eine Einheit Si-(CR²R³)ₓ-Si bedeutet, die zwei Fragmente LₙM⁺XBA⁻R¹ₘ miteinander verknüpft, worin x eine ganze Zahl von 0 bis 10 ist,
X und B zusammen eine drei bis fünfgliedrige Alkylkette bilden, die gesättigt oder ungesättigt und mit C₁-C₂₀-Kohlenwasserstoffresten substituiert sein kann,
A ein Metall der Gruppe Ib, IIb, IIIa, IVa, Va, Vb des Periodensystems der Elemente ist,
R¹ gleich oder verschieden sind und eine perfluorierte Alkyl- oder Arylgruppe mit 1 bis 20 C-Atomen bedeuten und
m gleich 2,3 oder 4 ist.

7. Übergangsmetallverbindung gemäß einem der Ansprüche 1 bis 6, dadurch gekennzeichnet, daß
M Zirkonium ist,
n gleich 2 ist,
L gleich oder verschieden sind und eine substituierte Cyclopentadienylgruppe bedeuten, wobei zwei Reste L über eine Verbrückung Z miteinander verbunden sind, wobei Z CR²R³ oder SiR²R³ ist,
X und B zusammen eine ungesättigte viergliedrige Alkylkette bilden, deren Wasserstoffatome auch durch C₁-C₂₀-Alkylgruppen substituiert sein können,
A ein Boratom ist,
R¹ gleich sind und eine Pentafluorophenylgruppe (C₆F₅) bedeuten und
m gleich 3 ist.

8. Katalysatorkomponente, enthaltend mindestens eine Übergangsmetallverbindung gemäß einem oder mehreren der Ansprüche 1 bis 7.

9. Katalysatorkomponente gemäß Anspruch 8, zusätzlich enthaltend einen Träger.

10. Verfahren zur Herstellung einer Verbindung der Formel I, 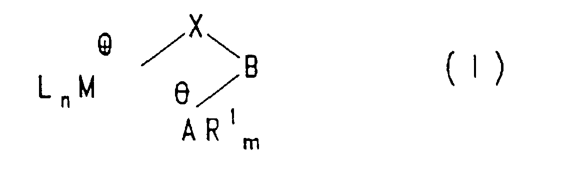 worin
L gleich oder verschieden ein π-Ligand oder ein Elektronendonor sind, n gleich 1, 2, 3 oder 4 ist,
M ein Metallatom der Gruppe IIIb, IVb, Vb oder VIb des Periodensystems der Elemente ist,
X ein Heteroatom oder eine Kohlenwasserstoffgruppe mit 1-40 C-Atomen ist,
B eine Kohlenwasserstoffgruppe mit 1-40 C-Atomen ist,
A ein Metallatom der Gruppe Ib, IIb, IIIa, IIIb, IVa, Va, Vb, VIb, VIIb oder VIIIb des Periodensystems der Elemente ist,
R¹ gleich oder verschieden sind und einen perhalogenierten C₁-C₄₀-Kohlenwasserstoffrest bedeuten, und m gleich 1, 2, 3, 4 oder 5 ist, wobei eine Verbindung der Formel II 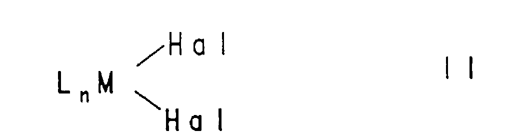 mit einer Verbindung der Formel III 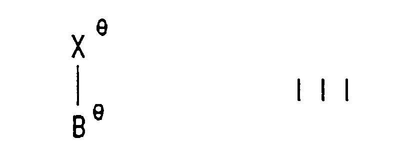
und das Reaktionsprodukt mit einer Verbindung der Formel AR¹ₘ umgesetzt wird, worin L, n, M, X, B, A, R¹ und m in den Formeln II, III und AR¹ₘ die gleiche Bedeutung haben wie die Formel I und Hal ein Halogenatom bedeutet.

11. Verfahren zur Herstellung eines Olefinpolymers durch Polymerisation mindestens eines Olefins in Gegenwart eines Katalysators, enthaltend mindestens eine Übergangsmetallverbindung der Formel I, 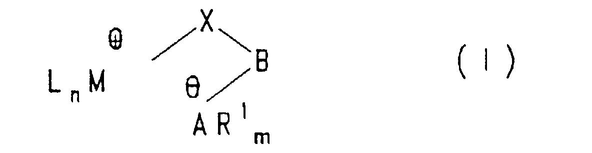 worin
L gleich oder verschieden ein n-Ligand oder ein Elektronendonor sind, n gleich 1, 2, 3 oder 4 ist,
M ein Metallatom der Gruppe IIIb, IVb, Vb oder VIb des Periodensystems der Elemente ist,
X ein Heteroatom oder eine Kohlenwasserstoffgruppe mit 1-40 C-Atomen ist,
B eine Kohlenwasserstoffgruppe mit 1-40 C-Atomen ist,
A ein Metallatom der Gruppe Ib, IIb, IIIa, IIIb, IVa, Va, Vb, VIb, VIIb oder VIIIb des Periodensystems der Elemente ist,
R¹ gleich oder verschieden sind und einen perhalogenierten C₁-C₄₀-Kohlenwasserstoffrest bedeuten, und m gleich 1, 2, 3, 4 oder 5 ist.

12. Verfahren gemäß Anspruch 11, dadurch gekennzeichnet, daß der Katalysator zusätzlich einen Träger enthält.

13. Verfahren gemäß Anspruch 10 oder 11, dadurch gekennzeichnet, daß mindestens ein 1-Olefin polymerisiert wird.

14. Verwendung einer Übergangsmetallverbindung der Formel I, 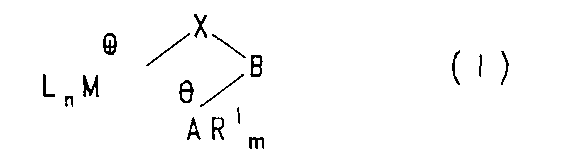 worin
L gleich oder verschieden ein π-Ligand oder ein Elektronendonor sind, n gleich 1, 2, 3 oder 4 ist,
M ein Metallatom der Gruppe IIIb, IVb, Vb oder VIb des Periodensystems der Elemente ist,
X ein Heteroatom oder eine Kohlenwasserstoffgruppe mit 1-40 C-Atomen ist,
B eine Kohlenwasserstoffgruppe mit 1-40 C-Atomen ist,
A ein Metallatom der Gruppe Ib, IIb, IIIa, IIIb, IVa, Va, Vb, VIb, VIIb oder VIIIb des Periodensystems der Elemente ist,
R¹ gleich oder verschieden sind und einen perhalogenierten C₁-C₄₀-
Kohlenwasserstoffrest bedeuten, und m gleich 1, 2, 3, 4 oder 5 ist, zur Olefinpolymerisation.

## Claims

1. A zwitterionic transition metal compound of the formula I 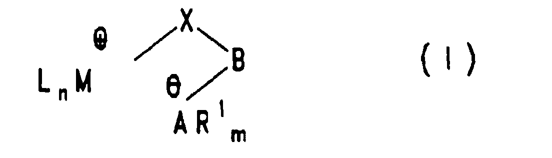 where
L are identical or different and are each a π ligand or an electron donor, n is equal to 1, 2, 3 or 4,
M is a metal atom of group IIIb, IVb, Vb or VIb of the Periodic Table of the Elements,
X is a heteroatom or a hydrocarbon group having 1-40 carbon atoms,
B is a hydrocarbon group having 1-40 carbon atoms,
A is a metal atom of group Ib, IIb, IIIa, IIIb, IVa, Va, Vb, VIb, VIIb or VIIIb of the Periodic Table of the Elements,
R¹ are identical or different and are each a perhalogenated C₁-C₄₀-hydrocarbon radical, and m is equal to 1, 2, 3, 4 or 5

2. A transition metal compound as claimed in claim 1, wherein the radicals L are identical or different and are each a π ligand.

3. A transition metal compound as claimed in claim 1 or 2, wherein the radicals L are identical or different and are each an unsubstituted or substituted cyclopentadienyl group.

4. A transition metal compound as claimed in one or more of claims 1 to 3, wherein the radicals L are joined to one another via a bridge.

5. A transition metal compound as claimed in any one of claims 1 to 4, wherein n = 2 when M is a metal atom of Group IVb of the Periodic Table of the Elements.

6. A transition metal compound as claimed in any one of claims 1 to 5, wherein
M is a metal atom of Group IVb of the Periodic Table of the Elements, n is equal to 2,
L are identical or different and are each a substituted or unsubstituted cyclopentadienyl group, where two radicals L may be joined to one another via a bridge Z, and
Z is CR²R³ or SiR²R³ or a unit Si-(CR²R³)ₓ-Si which links two fragments LₙM⁺XBA⁻R¹ₘ with one another, where x is an integer from 0 to 10,
X and B together form a three- to five-membered alkyl chain which may be saturated or unsaturated and may be substituted by C₁-C₂₀-hydrocarbon radicals,
A is a metal of Group Ib, IIb, IIIa, IVa, Va or Vb of the Periodic Table of the Elements,
R¹ are identical or different and are each a perfluorinated alkyl or aryl group having from 1 to 20 carbon atoms and
m is equal to 2, 3 or 4.

7. A transition metal compound as claimed in any one of claims 1 to 6, wherein
M is zirconium,
n is equal to 2,
L are identical or different and are each a substituted cyclopentadienyl group, where two radicals L arw joined to one another via a bridge Z, where Z is CR²R³ or SiR²R³,
X and B together form an unsaturated 4-membered alkyl chain whose hydrogen atoms may also be substituted by C₁-C₂₀-alkyl groups,
A is a boron atom,
R¹ are identical and are each a pentafluorophenyl group (C₆F₅) and
m is equal to 3.

8. A catalyst component comprising at least one transition metal compound as claimed in one or more of claims 1 to 7.

9. A catalyst component as claimed in claim 8 which further comprises a support.

10. A process for preparing a compound of the formula I, 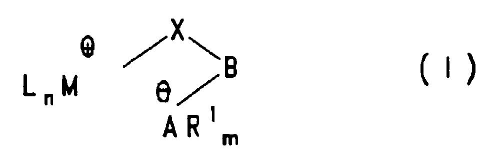 where
L are identical or different and are each a π ligand or an electron donor, n is equal to 1, 2, 3 or 4,
M is a metal atom of group IIIb, IVb, Vb or VIb of the Periodic Table of the Elements,
X is a heteroatom or a hydrocarbon group having 1-40 carbon atoms,
B is a hydrocarbon group having 1-40 carbon atoms,
A is a metal atom of group Ib, IIb, IIIa, IIIb, IVa, Va, Vb, VIb, VIIb or VIIIb of the Periodic Table of the Elements,
R¹ are identical or different and are each a perhalogenated C₁-C₄₀-hydrocarbon radical, and m is equal to 1, 2, 3, 4 or 5,
which comprises reacting a compound of the formula II 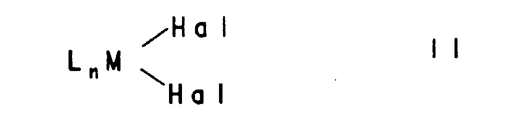 with a compound of the formula III 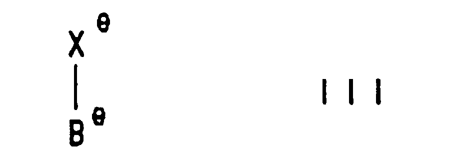 and reacting the reaction product with a compound of the formula AR¹ₘ, where L, n, M, X, B, A, R¹ and m in the formulae II, III and AR¹ₘ are as defined for the formula I and Hal is a halogen atom.

11. A process for preparing an olefin polymer by polymerization of at least one olefin in the presence of a catalyst comprising at least one transition metal compound of the formula I, 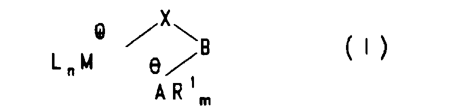 where
L are identical or different and are each a π ligand or an electron donor, n is equal to 1, 2, 3 or 4,
M is a metal atom of group IIIb, IVb, Vb or VIb of the Periodic Table of the Elements,
X is a heteroatom or a hydrocarbon group having 1-40 carbon atoms,
B is a hydrocarbon group having 1-40 carbon atoms,
A is a metal atom of group Ib, IIb, IIIa, IIIb, IVa, Va, Vb, VIb, VIIb or VIIIb of the Periodic Table of the Elements,
R¹ are identical or different and are each a perhalogenated C₁-C₄₀-hydrocarbon radical, and m is equal to 1, 2, 3, 4 or 5.

12. The process as claimed in claim 11, wherein the catalyst further comprises a support.

13. The process as claimed in claim 10 or 11, wherein at least one 1-olefin is polymerized.

14. The use of a transition metal compound of the formula I, 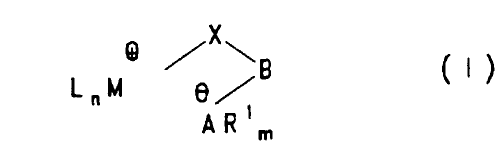 where
L are identical or different and are each a π ligand or an electron donor, n is equal to 1, 2, 3 or 4,
M is a metal atom of group IIIb, IVb, Vb or VIb of the Periodic Table of the Elements,
X is a heteroatom or a hydrocarbon group having 1-40 carbon atoms,
B is a hydrocarbon group having 1-40 carbon atoms,
A is a metal atom of group Ib, IIb, IIIa, IIIb, IVa, Va, Vb, VIb, VIIb or VIIIb of the Periodic Table of the Elements,
R¹ are identical or different and are each a perhalogenated C₁-C₄₀-hydrocarbon radical, and m is equal to 1, 2, 3, 4 or 5, for olefin polymerization.

## Revendications

1. Composés zwittérioniques de métal de transition de la formule I 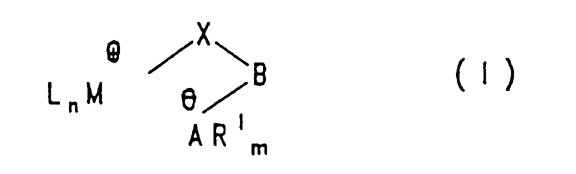 dans laquelle
L sont identiques ou différents et représentent un ligand π ou un donneur d'électrons, et n est égal à 1, 2, 3 ou 4.
M représente un atome métallique des groupes IIIb, IVb, Vb ou VIb du système périodique des éléments,
X représente un hétéroatome ou un groupe hydrocarbure comportant de 1 à 40 atomes de carbone,
B représente un groupe hydrocarbure comportant de 1 à 40 atomes de carbone,
A représente un atome métallique des groupes Ib, IIb, IIIa, IIIb, IVa, Va, Vb, VIb, VIIb ou VIIIb du système périodique des éléments,
R¹ sont identiques ou différents et représentent un reste hydrocarbure perhalogéné en C₁ à C₄₀, et m est égal à 1, 2, 3, 4 ou 5.

2. Composé de métal de transition selon la revendication 1, caractérisé en ce que les restes L sont identiques ou différents et représentent un ligand π.

3. Composé de métal de transition selon la revendication 1 ou 2, caractérisé en ce que les restes L sont identiques ou différents et représentent un radical cyclopentadiényle non substitué ou substitué.

4. Composé de métal de transition selon une ou plusieurs des revendications 1 à 3, caractérisé en ce que les restes L sont liés ensemble via un pontage.

5. Composé de métal de transition selon l'une des revendications 1 à 4, caractérisé en ce que n = 2, lorsque M représente un atome métallique du groupe IVb du système périodique des éléments.

6. Composé de métal de transition selon l'une des revendications 1 à 5, caractérisé en ce que
M représente un atome métallique du groupe IVb du système périodique des éléments, n est égal à 2,
L sont identiques ou différents et représentent un radical cyclopentadiényle substitué ou non substitué, deux restes L pouvant être reliés ensemble via un pontage Z, et
Z représente CR²R³ ou SiR²R³ ou une unité Si-(CR²R³)ₓ-Si, qui relie ensemble deux fragments LₙM⁺XBA⁻R¹ₘ, où x est un nombre entier de 0 à 10,
X et B représentent ensemble une chaîne alkylée comportant de trois à cinq membres, qui peuvent être saturés ou insaturés et substitués par des restes hydrocarbure en C₁ à C₂₀,
A représente un métal des groupes Ib, IIb, Il la, IVa, Va, Vb du système périodique des éléments,
R¹ sont identiques ou différents et représentent un radical aryle ou alkyle perfluoré comportant de 1 à 20 atomes de carbone et
m est égal à 2, 3 ou 4.

7. Composé de métal de transition selon l'une des revendications 1 à 6, caractérisé en ce que
M représente le zirconium,
n est égal à 2,
L sont identiques ou différents et représentent un radical cyclopentadiényle substitué, où deux restes L peuvent être reliés ensemble via un pontage Z, où Z représente CR²R³ ou SiR²R³,
X et B représentent ensemble une chaîne alkylée insaturée à quatre membres, dont les atomes d'hydrogène peuvent également être substitués par des restes hydrocarbure en C₁ à C20,
A représente un atome de bore,
R¹ sont identiques ou différents et représentent un radical pentafluorophényle (C₆F₅) et
m est égal à 3.

8. Composant de catalyseur contenant au moins un composé de métal de transition selon une ou plusieurs des revendications 1 à 7.

9. Composant de catalyseur selon la revendication 8, contenant en outre un support.

10. Procédé de préparation d'un composé de la formule I, 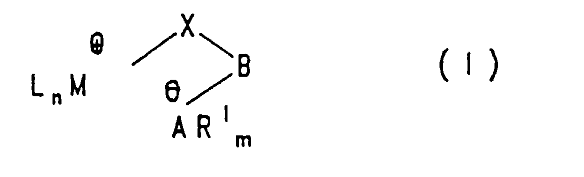 dans laquelle
L sont identiques ou différents et représentent et représentent un ligand π ou un donneur d'électrons, et n est égal à 1, 2, 3 ou 4.
M représente un atome métallique des groupes IIIb, IVb, Vb ou VIb du système périodique des éléments,
X représente un hétéroatome ou un groupe hydrocarbure comportant de 1 à 40 atomes de carbone,
B représente un groupe hydrocarbure comportant de 1 à 40 atomes de carbone,
A représente un atome métallique des groupes Ib, IIb, IIIa, IIIb, IVa, Va, Vb, VIb, VIIb ou VIIIb du système périodique des éléments,
R¹ sont identiques ou différents et représentent un reste hydrocarbure perhalogéné en C₁ à C₄₀, et m est égal à 1, 2, 3, 4 ou 5,
où l'on fait réagir un composé de la formule Il 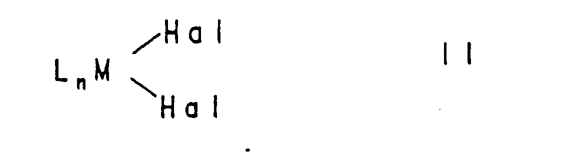 avec un composé de la formule III 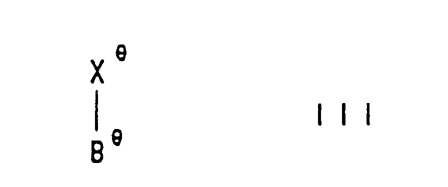
et l'on fait réagir le produit de réaction avec un composé de la formule AR¹ₘ, dans laquelle L, n, M, X, B, A, R¹ et m ont, dans les formules II, III et AR¹ₘ, la même signification que dans la formule I, et Hal représente un atome d'halogène.

11. Procédé de préparation d'un polymère oléfinique par polymérisation d'au moins une oléfine en présence d'un catalyseur, contenant au moins un composé de métal de transition de la formule I, 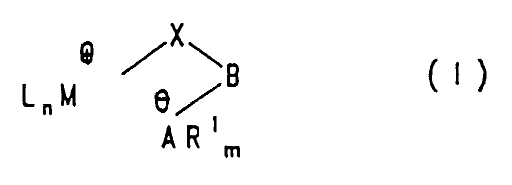 dans laquelle
L sont identiques ou différents et représentent un ligand π ou un donneur d'électrons, et n est égal à 1, 2, 3 ou 4.
M représente un atome métallique des groupes IIIb, IVb, Vb ou VIb du système périodique des éléments,
X représente un hétéroatome ou un groupe hydrocarbure comportant de 1 à 40 atomes de carbone,
B représente un groupe hydrocarbure comportant de 1 à 40 atomes de carbone,
A représente un atome métallique des groupes Ib, IIb, IIIa, IIIb, IVa, Va, Vb, VIb, VIIb ou VIIIb du système périodique des éléments,
R¹ sont identiques ou différents et représentent un reste hydrocarbure perhalogéné en C₁ à C₄₀, et m est égal à 1, 2, 3, 4 ou 5.

12. Procédé selon la revendication 11, caractérisé en ce que la catalyseur comporte en outre un support.

13. Procédé selon la revendication 10 ou 11, caractérisé en ce que l'on polymérise au moins une 1-oléfine.

14. Utilisation d'un composé de métal de transition de la formule I, 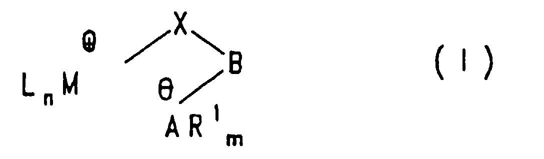 dans laquelle
L sont identiques ou différents et représentent un ligand π ou un donneur d'électrons, et n est égal à 1, 2, 3 ou 4.
M représente un atome métallique des groupes IIIb, IVb, Vb ou VIb du système périodique des éléments,
X représente un hétéroatome ou un groupe hydrocarbure comportant de 1 à 40 atomes de carbone,
B représente un groupe hydrocarbure comportant de 1 à 40 atomes de carbone,
A représente un atome métallique des groupes Ib, IIb, IIIa, IIIb, IVa, Va, Vb, VIb, VIIb ou VIIIb du système périodique des éléments,
R¹ sont identiques ou différents et représentent un reste hydrocarbure perhalogéné en C₁ à C₄₀, et m est égal à 1, 2, 3, 4 ou 5, pour la polymérisation d'oléfines.
